# EUROPEAN PATENT SPECIFICATION

(11) **EP 3 647 018 B1**
(45) Date of publication and mention of the grant of the patent: **14.05.2025**
(21) Application number: 18204109.5
(22) Date of filing: 02.11.2018
(51) Int. Cl.: B29C 53/08

(54) **MOULD FOR THE SPATIAL SHAPING OF PLASTIC PARTS MADE OF HDPE OR PA OR SIMILAR PLASTICS, IN PARTICULAR HDPE OR PA TUBES**
FORM ZUR RÄUMLICHEN FORMGEBUNG VON KUNSTSTOFFTEILEN AUS HDPE ODER PA ODER ÄHNLICHEN KUNSTSTOFFEN, INSBESONDERE HDPE- ODER PA-ROHRE
MOULE POUR LA MISE EN FORME SPATIALE DE PIÈCES EN PLASTIQUE EN HDPE OU EN PA OU EN PLASTIQUE SIMILAIRE, EN PARTICULIER DE TUBES EN HDPE OU EN PA

(43) Date of publication of application: 06.05.2020
(73) Proprietor: MSV SYSTEMS CZ s.r.o., 460 01 Liberec (CZ)
(72) Inventor: Tichy, David, 463 03 Straz nad Nisou (CZ); Belohlavek, Ondrej, 460 22 Liberec (CZ)
(74) Representative: Musil, Dobroslav

(56) References cited:
- DE-U1- 202013 100 888
- GB-A- 1 589 667
- US-A- 3 562 860
- US-A1- 2003 068 397

## Description

### Technical field

The invention relates to a mould for the spatial shaping of plastic parts made of HDPE or PA or similar plastics, in particular HDPE or PA tubes which comprises a body, which is provided with at least one contact wall for the contact between the mould with the moulded material, where at least the contact wall is made of a material having with a thermal conductivity lower than 5 W.m⁻¹.K⁻¹.

### Background art

HDPE (high-density polyethylene) is a thermoplastic having a density ranging from 0.93 to 0.97 g.cm⁻³. This material is temperature resistant in the range of -50°C to +110°C, as well as chemical resistant, odourless and suitable for direct contact with food. In addition, it is non-toxic and recyclable. Nowadays, a wide range of products - parts, including products with a complex spatial structure and shape, are made of HDPE, using plastic injection moulding technologies, foil-making technologies, blowing and extrusion technologies. The results of the manufacturing process are finished products, such as three-dimensional objects made by plastic injection moulding, foils, tubes, rods, etc. Similar is the case with PA and other plastics. As a semi-finished product for the manufacture of HDPE, PA and other plastic products, plastic is used in the form of granules, powders or tablets. Products made of these plastics, such as HDPE, PA and others, are thus made directly, obtaining the final shape at once, and secondary shaping is not generally applied. Alternatively, welding or bonding of simpler parts to form the final product can be applied. In the case of special products, such as spatially shaped tubes and other longitudinal products, etc., it is necessary to have special equipment for the production of these products, which is very costly and its operation is rather demanding.

Known are relatively simple methods for shaping plastic products from materials other than HDPE, PA, etc., such as producing complexly spatially shaped tubes from a plastic which is elastic at low temperatures by exerting force on a semi-finished product of a straight and low temperature elastic tube, whereby this semi-finished product undergoes elastic deformation and is inserted into a mould in the form of a labyrinth by which the originally straight tube is formed into the desired shape. Subsequently, the pre-shaped tube is heated by hot steam to the desired temperature either from the inside or from the outside and then is allowed to cool in the mould, whereby the originally straight tube takes on permanently the shape of the mould. The moulds used for this purpose are made either of steel or of another metal with a high temperature thermal conductivity, with steel having a thermal conductivity λ₂₀ of about 50 W.m⁻¹.K⁻¹. It is apparent that such bent tubes are made of a special elastic material which exhibits the required mechanical properties before moulding, i.e. before heating, as well as after moulding, i.e., after heating and cooling.

In the case of hot steam shaping (bending), hot steam the temperature of which is usually in the range of 110 ° C to 140 ° C is fed into the inner space of the shaped tube. As a result of heating the material of the shaped tube by this steam, the material of the shaped tube is brought into a plastic state in which, due to the stresses induced by inserting the shaped tube into the shaped form of the labyrinth made of steel or another metal, the originally straight tube is only elastically deformed and changes its shape, that is to say, it acquires the desired resulting and permanent shape of the bent tube. After this process of plasticizing the material of the tube, the steam supply is disconnected and the shaped tube is cooled, by which means the shape of the shaped tube is fixed in this state. If necessary, both in steam and furnace plastic tube bending, a resilient body, e.g., a spring, is inserted into the plastic tube to be bent, which ensures a circular cross-section of the plastic tube even after the tube material has been plasticized during heating and cooling. The insertion of this resilient body is not always necessary - it depends on the dimensional parameters of the bent tube, the wall thickness of the tube, the bending size, etc. In the furnace heating, after inserting the resilient body, the elastic tube is inserted into the labyrinth (bending mould), whereby by one of its ends it is inserted into the cavity of a stopper head arranged at one end of the labyrinth. The subsequent process consists in heating the shaped tube in the furnace to a plastic state, the heating temperature being in the range of 120 ° C to 220 ° C. As a result of plasticizing the material of the shaped tube in the furnace, due to the stresses induced by inserting the shaped tube into the labyrinth, the originally straight tube is deformed into the shape of the labyrinth, whereby during the subsequent cooling, the thus formed shape of the tube being shaped is fixed. Once the shape of the shaped tube has been fixed, the inner resilient body is pulled out.

It is known that during additional shaping of semi-finished products - parts made of HDPE or PA or similar plastics, which are quite stiff under normal temperatures, this material is preheated to a temperature of a few tens of ° C, typically around 50 to 60 ° C, whereby the elasticity of the material slightly improves compared to the room temperature, and afterwards the material can be pushed into the mould with the application of a relatively large force and effort, for example in the case of tubes, it is necessary to literally press it into a the mould in the form of a metal labyrinth with a high thermal conductivity, which is extremely physically demanding for the operator who subsequently suffers from health problems from long-term overloading. Similarly, this is the case with attempts to automate the process of inserting the heated product into the mould, since automation results in a considerable load on the nodes of the machine, raising the need for large dimensions of these nodes, which is expensive and inefficient. Moreover, although these parts are not heated to high temperatures, it is still necessary to perform the forcing of the tube into the labyrinth manually in protective clothing against burns, which further complicates the whole process.

The drawbacks of the background art are substantially reduced by the solution according to EP application No. 18182428.5, which discloses a method and device for shaping products made of HDPE or PA, in particular the HDPE or PA tube spatial shaping, in which HDPE or PA semi-finished product is shaped such that HDPE or the PA preform is first heated to a temperature T close to the melting temperature T_{g} of the material such that the material is still in a solid state. At this temperature T the HDPE or PA semi-finished product is left for a time period t₁, which is necessary for the semi-product to obtain plasticity, to disrupt completely or partially the crystalline or semi-crystalline structure of the HDPE or PA material and to return the material to an amorphous or partially amorphous state. Thereafter, the HDPE or PA semi-finished product is inserted into a shaping fixture and the temperature of the HDPE or PA material is gradually reduced to ambient temperature in order to recover the crystalline or semicrystalline structure and to relax the internal stresses of the HDPE or PA material, so that the shape of the shaped material after complete cooling down and removal from the mould is maintained. An ideal method for cooling the shaped part is gradual cooling by means of a tempering furnace for a certain time period at the tempering temperature required to restore or partially restore the crystalline or semicrystalline structure and to relax the internal stresses of HDPE or PA material. Subsequently, the HDPE or PA material is freely cooled by air and, if appropriate, it is cooled with a cooling medium, whereupon the HDPE or PA material is removed from the shaping fixture as a finished product from HDPE or PA. This option is reliable but requires the use of a tempering furnace, which limits productivity and increases costs. Under certain circumstances, it is also possible that the HDPE or PA material is freely cooled by air and, if appropriate, it is cooled with a cooling medium, whereupon the HDPE or PA material must be left in the shaping fixture at normal room temperature for the time required for the shape stabilization of HDPE or PA material, and it is possible only then to remove the HDPE or PA shaped part from the shaping fixture. This variant extends the time needed to leave the workpiece in the mould, reduces productivity and increases costs.

GB 1 589 667 describes a device and a method for shaping foam tubes for thermal insulation of heating or cooling distribution systems. A straight foam tube, with its longitudinal cavity, is drawn onto the outer circumference of a bent inner mould, which is formed by a bent metal tube. Thus, the straight foam tube attains the shape of the shaped foam tube. The bent inner mould is provided with a perforation for sucking air into the inner space of the inner mould through the foam material of the shaped foam tube. Consequently, the shaped foam tube is sucked by its inner surface onto the outer surface of the inner mould and copies its outer shape. After the tube is drawn onto the inner mould, the ends of the shaped foam tube are sealed, for example, by sleeves or rubber sealing discs or conical receptacles. To facilitate removal of the shaped foam tube from the inner mould, the inner mould is provided in the bent section with a longitudinal slot for guiding a knife or another cutting tool to cut the foam material of the shaped foam tube in the bent section to prevent tearing the shaped foam tube during its removal from the inner mould. To prevent the shaped foam tube from sintering or adhering to the outer wall of the inner mould during heat treatment of the shaped foam tube, the inner mould is coated with lacquers or another appropriate material reducing adhesion of the foam material of the shaped foam tube to the inner mould. GB 1 589 667 also describes that the foam tube is drawn onto the inner mould, the ends and of the shaped foam tube are sealed and the whole assembly is heated (in a furnace, at a source of heating, etc.) until the foam material of the shaped foam tube attains a plasticized conditions. The inner space of the inner mould is connected to vacuum (or under pressure) to suck the foam tube onto the inner mould. Then the foam tube is cooled down, optionally with the use of an external cooling medium or even a cooling medium circulating through the inner cavity of the inner mould. Subsequently, the foam tube is removed by slipping off the inner mould. When shaping tubes, GB 1 589 667 leads only to the insertion of an inner mould (tube) into the inner cavity of the shaped tube, which is, for example, completely impossible when shaping long and spatially complex tubes.

US 3 562 860 A describes a device for shaping plastic tubes, especially for creating short bends (col. 2, line 17), by inserting thin plates 3 into the shaped tube 7 (optionally closed at one of its ends), which fill the inner space of the shaped tube 7. The shaped tube 7 with the end (closed) is inserted to the beginning of the shaping channel in a two-part symmetrical mould 2 just before the bending section of the mould 2. The mould 2 is made of wood, plastic or metal, and is provided with integrated heating and cooling means which ensure all the heat treatment of the tube, i.e. heating, cooling and tempering, all this takes place in the mould 2 (col. 2, lines 48 to 60). A pressure element 4 presses on the ends of the plates 3 at the other end of the shaped tube 7 and the shaped tube 7 is pressed longitudinally into the bending section of the mould 2 so the tube 7 and inserted plates 3 are bent. After cooling the tube in the mould 2, the mould 2 is opened and the moulded tube 7 is removed, whereupon the plates 3 are removed. D2 depends on the connection of each mould 2 to heating, cooling and tempering sources. The mould 2 according to US 3 562 860 A is complex and expensive, so that the production rate is low. US 3 562 860 A does not allow to create spatially complex bends of longer tubes. Nowhere does D2 indicate an intentional deceleration of the cooling of the tube 7 in the mould 2 without expending additional energy through channels 6.

The aim of the invention is therefore to eliminate or at least minimize the disadvantages of the background art, especially to improve productivity and also reduce the costs of the additional shaping of parts made of HDPE or PA tubes or similar plastics, particularly of HDPE or PA tubes.

### Principle of the invention

The aim of the invention is achieved by a mould for the spatial shaping of plastic parts made of HDPE or PA or similar plastics, in particular of HDPE or PA tubes, whose principle consists in that the contact wall is formed on the shaping labyrinth for shaping tubes, which is formed as a spatially formed tube with a longitudinal cavity, which is provided with a through slot along its length to insert the shaped tube into the labyrinth or is formed as a shaped groove in a body, whereas the shaping labyrinth is adapted to hold the shaped tube in the shaping labyrinth for slow cooling of the product so as to recover or partially recover the crystalline or semicrystalline structure and to relax the internal stresses of HDPE or PA or similar plastics by simply cooling the product in the mould in free air.

The invention permits replacing a tempering furnace for slow cooling of the product so as to recover or partially recover the crystalline or semicrystalline structure and to relax the internal stresses of HDPE or PA material by simply cooling the product in the mould in free air and at the same time eliminating the need for leaving the product in the shaping fixture (in the mould) at normal room temperature for the time required for the shape stabilization of the HDPE or PA material, thereby achieving comparable results to using a tempering furnace even without the use of a tempering furnace. This also improves productivity by eliminating the need to wait for relaxation of internal stresses at room temperature.

### Description of drawings

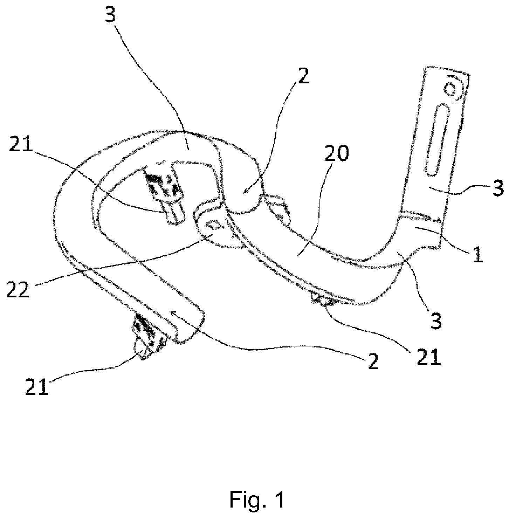

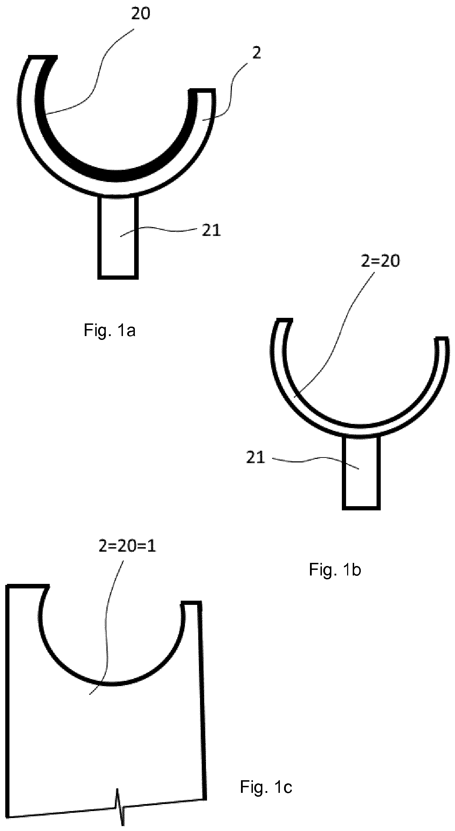

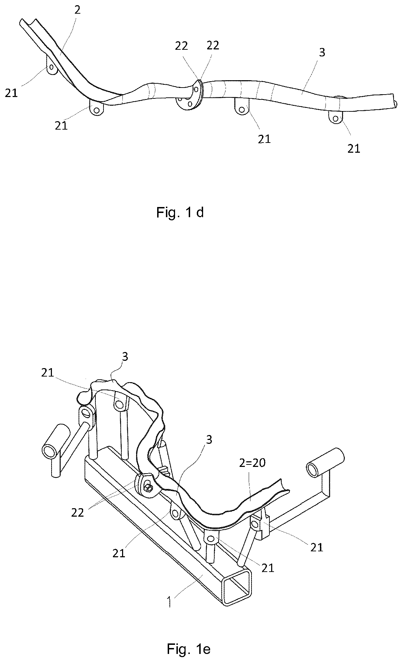

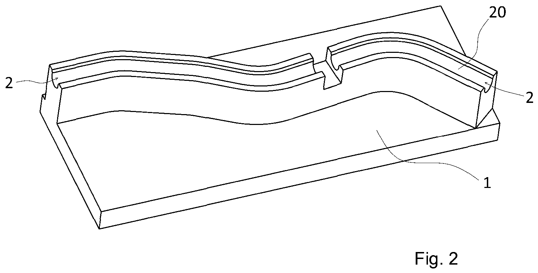

The invention is schematically represented in the drawings, wherein Fig. 1 an example of a labyrinth for shaping tubes made of HDPE or PA according to the invention to be fastened on a rod holder of a carrier, Fig. 1a is a sectional view of a labyrinth with a contact surface in the form of a surface layer, Fig. 1b is a sectional view of a labyrinth with a contact surface which is an integral part of the body of the labyrinth, Fig. 1c is a cross-section of a labyrinth with a contact wall which is an integral part of the body of the labyrinth which is an integral part of the carrier (see Figure 2), Fig. 1d is an example of a labyrinth with holders for fastening on the carrier, Fig. 1e is an example of a labyrinth fastened by means of holders on the carrier and Fig. is an example of a labyrinth for shaping tubes made of HDPE or PA according to the invention with an integrated carrier.

### Examples of embodiment

The invention will be described with reference to an exemplary embodiment of a mould, or a shaping fixture, for shaping products made of HDPE or PA or similar plastics, in which a pre-prepared product, in fact a semi-finished product, e.g., a straight tube or a multilayer tube, etc., is heated and inserted into a mould and, having been left in the mould for a required period of time, is formed into a desired shape - the resulting product, e.g. spatially shaped (bent) tubes.

The mould for the spatial shaping of plastic parts made of HDPE or PA or similar plastics comprises a body **1**, in which the shaping labyrinth **2** is formed. The mould **1** is formed either as a single or multi-part, and so is the shaping labyrinth **2**. The shaping labyrinth **2** has a spatial arrangement corresponding to the desired spatial arrangement of the final product, i.e., in this case the specifically desired resulting spatial shape of the HDPE or PA tube being formed. The dimensions of the shaping labyrinth **2** correspond to the dimensions of the shaped tube. For example, the shaping labyrinth **2** is formed as a spatially formed tube with a longitudinal cavity which is provided with a through slot along its length to insert the shaped tube into the labyrinth **2**, or the shaping labyrinth **2** is formed as a shaped groove in a suitable body. The shaping labyrinth **2** is made by suitable technology, for example, by cutting from a bent tube, by 3D printing, by machining, etc., or by a combination of two or more technologies, etc.

The mould is further adapted to hold the shaped tube in the shaping labyrinth **2,** for example by means of flaps **3** arranged appropriately along the length of the labyrinth **2,** and despite the presence of the flaps **3** the labyrinth **2** is able to accommodate the shaped tube by inserting a tube from the outside of the labyrinth **2**. The shaping labyrinth **2** comprises a contact wall **20** with a shaped tube on its inner side, the contact wall **20** being a functional shape wall **20** of the labyrinth **2,** which is decisive for the future shape of the tube being formed.

In the exemplary embodiment in Fig. 1 and 1a, the contact wall **20** of the shaping labyrinth **2** is formed by a coating or insert made of a material with a thermal conductivity lower than 5 W.m⁻¹.K⁻¹, more preferably with a thermal conductivity lower than 1 W.m⁻¹.K⁻¹, most preferably with a thermal conductivity lower than 0.5 W.m⁻¹.K⁻¹. The coating or insert is formed by a suitable technology, such as coating, 3D printing, pressing, etc., or by combining at least two different technologies.

In the exemplary embodiment in Fig. 1b the entire shaping labyrinth **2** is made of a material with a thermal conductivity lower than 5 W.m⁻¹.K⁻¹, more preferably with a thermal conductivity lower than 1 W.m⁻¹.K⁻¹, most preferably with a thermal conductivity lower than 0.5 W.m⁻¹.K⁻¹. The labyrinth is made by a suitable technology, such as machining, 3D printing, cutting the shaped tube from a suitable material, etc., or by combining at least two different technologies.

In the embodiments of Fig. 1, 1a, 1b, 1d and 1e, the shaping labyrinth **2** is provided with fastening means **21** for fastening it on the carrier **4**, which is shown in Fig. 1e. Figs. 1, 1a, 1b, 1d and 1e show a particularly preferred embodiment of a labyrinth **2,** wherein the labyrinth **2** is for production simplification divided into sections which are provided with special flanges **22** for joining individual adjacent sections of the labyrinth **2** The embodiments of the flanges **22** and their principle, however, are not the subject-matter of the present invention.

In an exemplary embodiment in Figs. 1c and 2, the entire mould, i.e., including the body **1** and te shaping labyrinth **2** ae made of a material with a thermal conductivity lower than 5 W.m⁻¹.K⁻¹, more preferably with a thermal conductivity lower than 1 W.m⁻¹.K⁻¹, most preferably with a thermal conductivity lower than 0,5 W.m⁻¹.K⁻¹. The labyrinth is made by a suitable technology, such as machining, 3D printing, cutting the shaped tube from a suitable material, etc., or by combining at least two different technologies. The body **1** and the labyrinth **2** are made by a suitable technology, such as machining, 3D printing, cutting from a suitable material, etc., or by combining at least two different technologies.

An example of a material with a thermal conductivity lower than 5 W.⁻¹.K⁻¹ is wood, plastic, especially polymer, reinforced polystyrene, teflon, a composite, especially polymeric matrix composite, etc. From the point of view of the durability of the mould, or, more specifically, its contact walls 20, it is desirable and advantageous if the material used with a thermal conductivity lower than 5 or 1, or 0.5 W.m⁻¹.K⁻¹ has temperature resistance at least at the level to which a shaped product of HDPE or PA or similar plastics is heated prior to being inserted into the mould according to the present invention.

The mould according to the present invention operates in such a manner that it substantially reduces heat dissipation from the shaped tube during the cooling of the tube, and therefore it is not necessary to use a tempering furnace to slow the cooling process of the product for the recovering of the crystalline or semicrystalline structure and for the relaxation of the internal tension of HDPE or PA material, nor is it necessary to prolong production time by waiting for HDPE or PA material shape stabilization in the mould in air. This results in reducing the overall cost by the acquisition cost and operating costs for the tempering furnace, shorten the production times and increase production throughput.

In the case of the mould for forming other shapes, the contact walls **20** for the contact with the material being shaped are provided with at least a coating of a material with a thermal conductivity lower than 5 W.m⁻¹.K⁻¹, more preferably with a thermal conductivity lower than 1 W.m⁻¹.K⁻¹, most preferably with a thermal conductivity lower than 0.5 W.m⁻¹.K⁻¹, or the contact walls **20** or part on which the contact walls **20** located are directly made of a material with a thermal conductivity lower than 5 W.m⁻¹.K⁻¹, more preferably with a thermal conductivity lower than 1 W.m⁻¹.K⁻¹, most preferably with a thermal conductivity lower than 0.5 W.m⁻¹.K⁻¹.

### Industrial applicability

The invention is applicable for series production of products made of HDPE or PA or similar plastics by further shaping of previously produced semi-products. It is particularly advantageous for the spatious shaping of HDPE or PA tubes from HDPE or PA straight tubes.

## Claims

1. The mould for the spatial shaping of plastic parts made of HDPE or PA or similar plastics, in particular HDPE or PA tubes, which comprises a body (1), which is provided with at least one contact wall (20) for the contact between the mould with the moulded material, where at least the contact wall (20) is made of a material having with a thermal conductivity lower than 5 W.m⁻¹.K⁻¹, **characterized in that** the contact wall (20) is formed on the shaping labyrinth (2) for shaping tubes, which is formed as a spatially formed tube with a longitudinal cavity, which is provided with a through slot along its length to insert the shaped tube into the labyrinth (2) or is formed as a shaped groove in a body, whereas the shaping labyrinth (2) is provided with means for holding the shaped tube in the shaping labyrinth (2) for slow cooling of the product so as to recover or partially recover the crystalline or semicrystalline structure and to relax the internal stresses of HDPE or PA or similar plastics by simply cooling the product in the mould in free air.

2. The mould according to claim 1, **characterized in that** the contact wall (20) of the shaping labyrinth (2) is formed by a coating or insert made of a material with a thermal conductivity lower than 5 W.m⁻¹.K⁻¹.

3. The mould according to claim 1, **characterized in that** entire shaping labyrinth (2) with the body (1) is made of a material with a thermal conductivity lower than 5 W.m⁻¹.K⁻¹.

4. The mould according to any of claims 1 to 3, **characterized in that** the means for holding the shaped tube in the shaping labyrinth (2) are created by flaps (3), which are arranged along the length of the labyrinth (2).

## Patentansprüche

1. Form zum räumlichen Formen von Kunststoffteilen aus HDPE oder PA oder ähnlichen Kunststoffen, insbesondere Rohren aus HDPE oder PA, die einen Körper (1) aufweist, der mindestens eine Kontaktwand (20) zum Kontakt der Form mit geformtem Material aufweist, wo mindestens die Kontaktwand (20) aus einem Material mit einer Wärmeleitfähigkeit von weniger als 5 W.m⁻¹.K⁻¹ ausgebildet ist, **dadurch gekennzeichnet, dass** die Kontaktwand (20) an einem Formlabyrinth (2) zum Formen von Rohren ausgebildet ist, das als räumlich geformtes Rohr mit einem Längshohlraum ausgebildet ist, das entlang seiner Länge einen Durchgangsschlitz zum Hineinschieben des geformten Rohrs in das Labyrinth (2) aufweist oder das als räumlich geformte Formnut im Körper ausgebildet ist, wobei das Formlabyrinth (2) die Mittel zum Halten des geformten Rohrs im Formlabyrinth (2) zum verlangsamten Abkühlen des Produkts zum Wiederherstellen oder teilweisen Wiederherstellen der kristallinen oder semikristallinen Struktur und zur Relaxation der inneren Spannung von HDPE oder PA oder ähnlichen Kunststoffen durch einfaches Abkühlen des Produkts in der Form an der frischen Luft aufweist.

2. Form nach dem Anspruch 1, **dadurch gekennzeichnet, dass** die Kontaktwand (20) des Formlabyrinths (2) durch einen Auftrag oder eine Einlage aus einem Material mit einer Wärmeleitfähigkeit von weniger als 5 W.m⁻¹.K⁻¹ gebildet wird.

3. Form nach dem Anspruch 1, **dadurch gekennzeichnet, dass** das Formlabyrinth (2) auch mit dem Körper (1) aus einem Material mit einer Wärmeleitfähigkeit von weniger als 5 W.m⁻¹.K⁻¹ gebildet wird.

4. Form nach einem der Ansprüche 1 bis 3, **dadurch gekennzeichnet, dass** die Mittel zum Halten des geformten Rohrs im Hohlraum des Formlabyrinths (2) durch Lippen (3) gebildet sind, die entlang der Länge des Labyrinths (2) angeordnet sind.

## Revendications

1. Moule pour façonnage tridimensionnel de pièces en plastique (PE-HD, PA ou autres matières plastiques similaires), en particulier des tuyaux en PE-HD ou PA, comprenant un corps (1) pourvu d'au moins une paroi de contact (20) pour le contact entre le moule et le matériau à façonner, dans lequel au moins la paroi de contact (20) est formée d'un matériau ayant une conductivité thermique de moins de 5 W.m⁻¹.K⁻¹, **caractérisé en ce que** la paroi de contact (20) est formée sur un labyrinthe de façonnage (2) pour façonnage des tuyaux, le labyrinthe de façonnage (2) étant formé comme un tuyau tridimensionnel pourvu d'une cavité longitudinale avec une fente de passage sur sa longueur qui permet d'insérer le tuyau façonné dans le labyrinthe (2) ou étant formé comme une rainure tridimensionnelle dans le corps, tandis que le labyrinthe de façonnage (2) est pourvu de moyens pour maintenir le tuyau façonné dans le labyrinthe de façonnage (2) pour le refroidissement lent du produit afin de restaurer ou de restaurer partiellement la structure cristalline ou semi-cristalline et de libérer la pression intérieure du PE-HD, du PA ou de matières plastiques similaires en refroidissant le produit simplement dans le moule à l'air libre.

2. Moule selon la revendication 1, **caractérisé en ce que** la paroi de contact (20) du labyrinthe de façonnage (2) comprend un dépôt ou un revêtement d'un matériau ayant une conductivité thermique inférieure à 5 W.m⁻¹.K⁻¹.

3. Moule selon la revendication 1, **caractérisé en ce que** le labyrinthe de façonnage (2), ainsi que le corps (1), est formé d'un matériau ayant une conductivité thermique inférieure à 5 W.m⁻¹.K⁻¹.

4. Moule selon l'une des revendications de 1 à 3, **caractérisé en ce que** les moyens de maintien du tuyau façonné dans la cavité du labyrinthe de façonnage (2) comprennent des valves (3) disposées sur la longueur du labyrinthe (2).
